(19)

Europäisches
Patentamt
European
Patent Office
Office européen
des brevets

(11) **EP 3 904 995 A1**

(12) **EUROPEAN PATENT APPLICATION**
published in accordance with Art. 153(4) EPC

(43) Date of publication:
**03.11.2021 Bulletin 2021/44**

(21) Application number: **19906078.1**

(22) Date of filing: **26.11.2019**

(51) Int Cl.:
**G05D 1/02** (2020.01)    **G01B 11/00** (2006.01)
**G08G 1/00** (2006.01)    **G01C 21/12** (2006.01)
**G01C 21/30** (2006.01)    **G06T 7/00** (2017.01)

(86) International application number:
**PCT/JP2019/046198**

(87) International publication number:
**WO 2020/137313 (02.07.2020 Gazette 2020/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.12.2018 JP 2018247816**

(71) Applicant: **Panasonic Intellectual Property
Management Co., Ltd.
Osaka-shi, Osaka 540-6207 (JP)**

(72) Inventor: **OKADA, Tsukasa
Osaka-shi, Osaka 540-6207 (JP)**

(74) Representative: **Eisenführ Speiser
Patentanwälte Rechtsanwälte PartGmbB
Postfach 10 60 78
28060 Bremen (DE)**

(54) **LOCALIZATION DEVICE**

(57)    A positioning device(100) comprises: an imaging unit (2) that is mounted on the moving body and captures an image of surroundings of the moving body to acquire the captured image; a detector (3) that detects motion information indicating motion of the moving body; a controller (4) that extracts a feature point from the captured image; and a storage (5) that stores position information indicating a spatial position of the feature point in the surroundings. The controller (4) searches the captured image for an on-image position corresponding to the spatial position indicated by the position information and computes a positional relationship between the spatial position indicated by the position information and the imaging unit to obtain the position of the moving body in the surroundings. The controller (4) sets, based on the motion information detected by the detector, a reference point for use in searching the captured image for the spatial position.

*Fig.2*

## Description

TECHNICAL FIELD

The present disclosure relates to a positioning device that determines a position of a moving body.

BACKGROUND ART

Patent Document 1 discloses an information processing device including a tracking unit that acquires images captured by an imaging unit provided on a moving body and associates feature points in an image captured before motion with feature points in an image captured after the motion, a region estimation unit that acquires information on the motion and estimates, based on the information, a region where changes in two-dimensional positions, as viewed from the moving body, of the feature points before and after the motion are small, and an estimation processing unit that estimates a self-position of the moving body based on the feature points associated with each other by the tracking unit and located in the region. This provides the information processing device capable of satisfactorily performing feature point tracking even when a camera suddenly changes in orientation and high in robustness.

PRIOR ART DOCUMENTS

PATENT DOCUMENTS

Patent Document 1: WO 2016/031105 A

SUMMARY OF THE INVENTION

PROBLEMS TO BE SOLVED BY THE INVENTION

The present disclosure provides a positioning device that efficiently determines a position of a moving body based on motion information on the moving body.

MEANS FOR SOLVING THE PROBLEMS

One aspect of the present disclosure provides a positioning device that determines a position of a moving body. The positioning device includes an imaging unit that is mounted on the moving body and captures an image of surroundings of the moving body to acquire the captured image, a detector that detects motion information indicating motion of the moving body, a controller that extracts a feature point from the captured image, and a storage that stores position information indicating a spatial position of the feature point in the surroundings. The controller searches the captured image for an on-image position corresponding to the spatial position indicated by the position information and computes a positional relationship between the spatial position indicated by the position information and the imaging unit to obtain the position of the moving body in the surroundings. The controller sets, based on the motion information detected by the detector, a reference point for use in searching the captured image for the spatial position.

Another aspect of the present disclosure provides a positioning device that determines a position of a moving body. The positioning device includes an imaging unit that is mounted on the moving body and captures an image of surroundings of the moving body to acquire the captured image, a detector that detects motion information indicating motion of the moving body, a controller that extracts a feature point from the captured image, and a storage that stores position information indicating a spatial position of the feature point in the surroundings. The controller searches the captured image for an on-image position corresponding to the spatial position indicated by the position information and computes a positional relationship between the spatial position indicated by the position information and the imaging unit to obtain the position of the moving body in the surroundings. The controller changes, based on the motion information detected by the detector, a search range for use in searching the captured image for the spatial position.

EFFECTS OF THE INVENTION

The positioning device according to the present disclosure is capable of efficiently determining the position of the moving body based on the motion information on the moving body.

BRIEF DESCRIPTION OF THE DRAWINGS

FIG. 1 is a diagram illustrating a structure of a moving body equipped with a positioning device according to a first embodiment of the present disclosure.
FIG. 2 is a block diagram showing a structure of the positioning device according to the first embodiment.
FIG. 3 is a flowchart showing an operation flow of the positioning device according to the first to third embodiments.
FIG. 4 is a diagram illustrating a captured image and feature points in the captured image.
FIG. 5 is a diagram schematically illustrating a 3D map.
FIG. 6 is a flowchart showing a detailed flow of a feature point matching step according to the first embodiment.
FIG. 7 is a diagram for describing a feature point matching process according to the first embodiment.
FIG. 8 is a diagram for describing a process of computing a degree of similarity between features according to the first embodiment.
FIG. 9 is a flowchart showing a detailed flow of a step of computing a predicted camera pose according to the first embodiment.

FIG. 10 is a block diagram showing a structure of a positioning device according to a second embodiment of the present disclosure.

FIG. 11 is a flowchart showing a detailed flow of feature point matching according to the second embodiment.

FIG. 12 is a diagram for describing a step of specifying a search range according to the second embodiment.

FIG. 13 is a diagram for describing a process of detecting vibrations executed by a controller.

FIG. 14 is a flowchart showing a detailed flow of a feature point matching step according to a third embodiment.

FIG. 15a is a diagram illustrating a captured image captured at time t - Δt.

FIG. 15b is a diagram illustrating a captured image captured at time t.

## MODE(S) FOR CARRYING OUT THE INVENTION

Hereinafter, embodiments according to the present disclosure will be described with reference to the drawings. Note that, in each of the following embodiments, the similar components are denoted by the same reference numerals.

(First embodiment)

1. Overview

A positioning device according to the first embodiment of the present disclosure is mounted on a moving body such as a manned cargo-handling vehicle, an automated guided vehicle (AGV), or an autonomous mobile cargo-carrying robot, and the positioning device determines a position of the moving body.

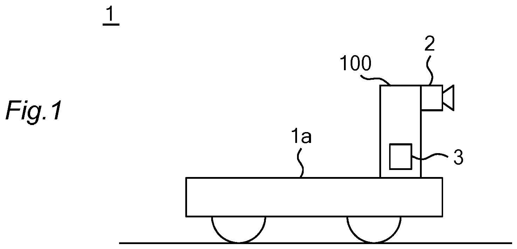

FIG. 1 is a diagram illustrating a structure of a moving body 1. The moving body 1 includes, for example, a loading platform 1a on which cargo is loaded. The moving body 1 is equipped with a positioning device 100 according to the present embodiment. The positioning device 100 includes a camera 2 that captures an image of surroundings of the moving body 1 and an inertial measurement unit (hereinafter, referred to as an "IMU") 3. The IMU 3 is a device that detects acceleration and angular velocity of the moving body 1.

For example, Visual-Simultaneous Localization and Mapping (SLAM) for determining a self-position and constructing 3D map information based on images captured one after another is applicable to the positioning device 100.

The positioning device 100 extracts feature points in the image captured by the camera 2. Examples of such feature points include an edge, a corner, and the like of an object, a road, a structure, and the like. The positioning device 100 constructs a 3D map by transforming coordinates on the image of each feature point thus extracted on the image into world coordinates and setting a map point corresponding to the feature point on the image to a world coordinate space. The positioning device 100 causes the camera 2 to capture the images of surroundings of the moving body 1 at a constant frame rate while the moving body 1 is in motion and performs a feature point matching process of associating each feature point on each image thus captured with a map point on the 3D map. The positioning device 100 computes a position and orientation of the camera 2 (hereinafter referred to as a "camera pose") based on a geometrical positional relationship between a feature point in the current frame and a feature point in the previous frame. The positioning device 100 can obtain a position of the positioning device 100 and in turn a position of the moving body 1 based on the position of the camera 2 thus computed.

Position information determined by the positioning device 100 is stored in, for example, an external server and may be used for various data management in the surroundings through which the moving body 1 has traveled.

The positioning device 100 may be used to move the moving body 1 based on the position information on the moving body 1 thus computed and the information on the 3D map thus constructed.

2. Structure

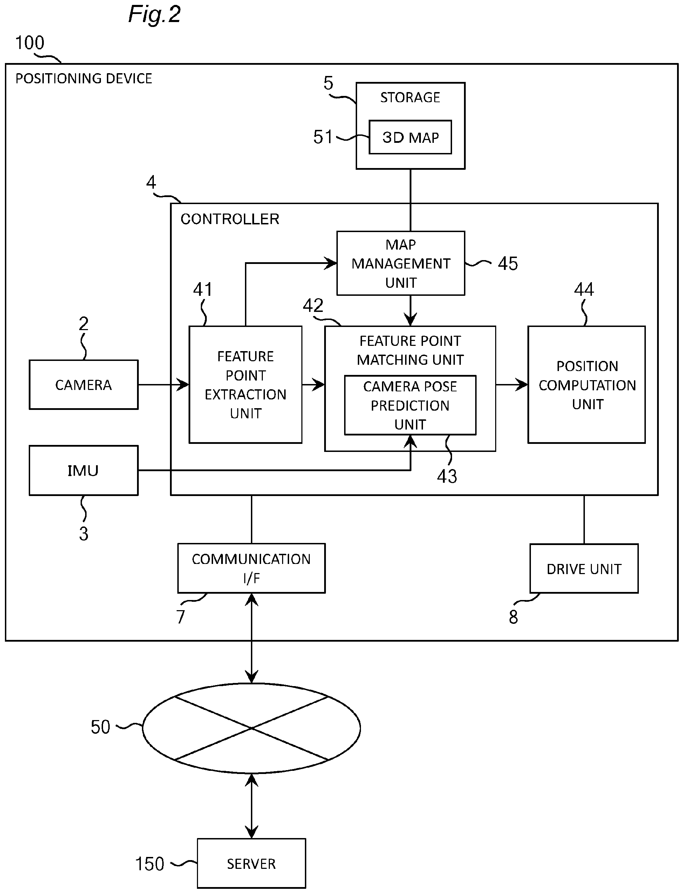

FIG. 2 is a block diagram showing a structure of the positioning device 100. The positioning device 100 includes the camera 2, the IMU 3, a controller 4, a storage 5, a communication interface (I/F) 7, and a drive unit 8.

The camera 2 is an example of an imaging unit according to the present disclosure. The camera 2 is installed on the moving body 1 and captures the image of the surroundings of the moving body 1 to generate color image data and distance image data. The camera 2 may include a depth sensor such as an RGB-D camera or a stereo camera. Alternatively, the camera 2 may include an RGB camera that captures a color image and a time-of-flight (ToF) sensor that captures a distance image.

The IMU 3 is an example of a detector according to the present disclosure. The IMU 3 includes an accelerometer that detects acceleration of the moving body 1 and a gyroscope that detects angular velocity of the moving body 1.

The controller 4 includes a general-purpose processor such as a CPU or MPU that cooperates with software to implement a predetermined function. The controller 4 loads and executes a program stored in the storage 5 to implement various functions of a feature point extraction unit 41, a feature point matching unit 42, a position computation unit 44, and a map management unit 45, and the like to control the overall operation of the positioning device 100. For example, the controller 4 executes a program for implementing a positioning method according to the present embodiment or a program for implementing the SLAM algorithm. The controller 4 is not limited to a controller that implements a predetermined function through cooperation between hardware and software, and the controller 4 may be a hardware circuit such as an FPGA, an ASIC, or a DSP customized for implementing the predetermined function.

The storage 5 is a recording medium that stores various information including a program and data necessary for implementing the functions of the positioning device 100. For example, a 3D map 51 and image data are stored in the storage 5. The storage 5 is implemented by any one or combination of storage devices such as a semiconductor memory device such as a flash memory or an SSD, a magnetic storage device such as a hard disk, and a storage device of a different type. The storage 5 may include a volatile memory such as an SRAM or a DRAM capable of high-speed operation for temporarily storing various information. Such a volatile memory serves as, for example, a work area of the controller 4 or a frame buffer that temporarily stores image data on a frame-by-frame basis.

The communication I/F 7 is an interface circuit that enables a communication connection to be established between the positioning device 100 and an external device such as a server 150 over a network 50. The communication I/F 7 makes communications in accordance with a standard such as IEEE802.3, IEEE802.11, or Wi-Fi.

The drive unit 8 is a mechanism that moves the moving body 1 in accordance with an instruction from the controller 4. For example, the drive unit 8 includes a drive circuit of an engine connected to tires of the moving body 1, a steering circuit, and a brake circuit.

3. Operation

3-1. Overview of operation

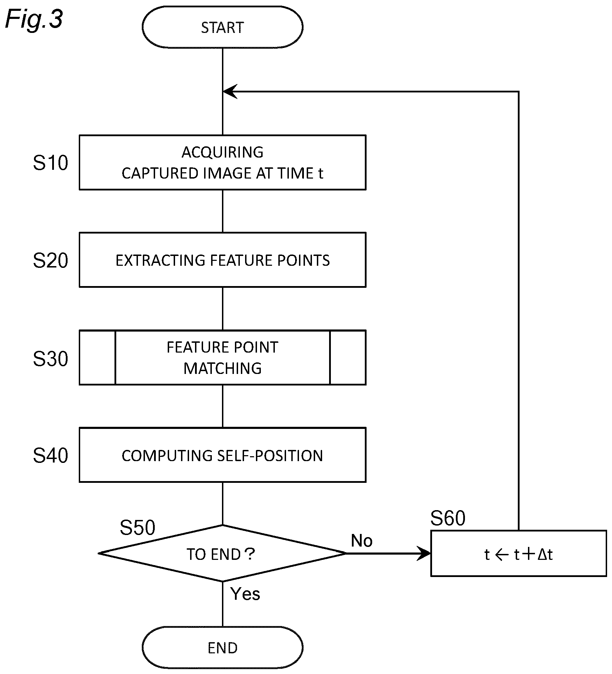

FIG. 3 is a flowchart showing an operation flow of the positioning device 100. Each process of the flowchart shown in FIG. 3 is executed by the controller 4 of the positioning device 100.

First, the controller 4 acquires a captured image captured at time t (S10). Herein, the captured image is image data that is captured by the camera 2 and represents the surroundings of the moving body 1.

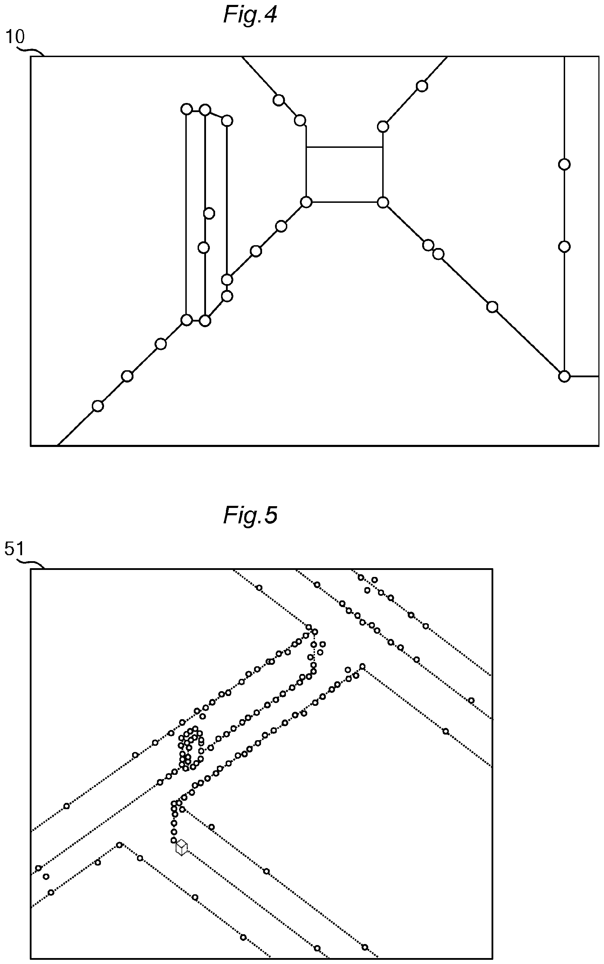

Next, the controller 4 serving as the feature point extraction unit 41 analyzes the captured image to extract feature points (S20). FIG. 4 is a diagram illustrating a captured image 10 and feature points in the captured image 10. In FIG. 4, circles indicate the feature points extracted from the captured image 10. The controller 4 extracts, as the feature points, pixels or a pixel group whose brightness value or color makes the pixels or pixel group distinguishable from surrounding pixels or pixel group. The feature points identify, for example, an edge, a corner, a pattern, and the like of an object, a road, a structure, and the like. For example, Features from Accelerated Segment Test (FAST) that is publicly known may be used for detecting the feature points from the captured image 10.

Note that the controller 4 performs not only the process of computing the self-position of the moving body 1 but also the process of constructing the 3D map 51. The controller 4 serving as the map management unit 45 transforms the coordinates of each feature point on the captured image 10 into world coordinates and sets a map point corresponding to the feature point on the captured image 10 to a world coordinate space to construct the 3D map 51. On the 3D map 51, the map points corresponding to the feature points on the captured image 10, a camera frame showing the captured image 10, and a camera pose of the camera 2 when the captured image is captured, are recorded. Information on the 3D map 51 thus constructed is stored in the storage 5. For example, the controller 4 is capable of constructing the 3D map 51 as illustrated in FIG. 5 by acquiring the captured image at time intervals $\Delta t$ and setting the feature points while the moving body 1 is in motion.

FIG. 5 is a diagram schematically illustrating the 3D map 51. The map points corresponding to the feature points on the captured image 10 are set to the 3D map 51. Each of the map points has world coordinates. Each of the map points is marked with a circle in FIG. 5. Structural information shown by a dashed line in FIG. 5 is not recorded on the 3D map 51, but is shown for convenience of explanation. The controller 4 is capable of reproducing the structural information as shown by the dashed line by acquiring the captured image at the time intervals $\Delta t$ and setting the feature points.

Returning to FIG. 3, the controller 4 serving as the feature point matching unit 42 performs, subsequent to step S20, the feature point matching process of associating each of the feature points, extracted in step S20, on the captured image 10 captured at time t with a map point on the 3D map 51 (S30). Alternatively, as the feature point matching process, the controller 4 uses, for example, Kanade-Lucas-Tomasi (KLT) tracker that is publicly known to associate each of the feature points on the captured image 10 captured at time t - $\Delta t$ with a corresponding one of the feature points on the captured image 10 captured at time t.

Next, the controller 4 serving as the position computation unit 44, computes the camera pose at time t. The controller 4 is capable of obtaining the position (self-position) of the positioning device 100 and in turn the position (self-position) of the moving body 1 based on the camera pose thus computed (S40). The camera pose at time t is computed based on, for example, the geometrical positional relationship between each feature point on the image captured at time t and a corresponding feature point on the image captured at time t - $\Delta t$. Alternatively, the camera pose at time t is computed based on, for example, the camera pose at time t - $\Delta t$ and a result of detection made by the IMU 3.

The controller 4 repeats the above-described steps S10 to S40 at the predetermined time intervals $\Delta t$ (S60) until the controller 4 determines the end of process (S50). The end of process is determined, for example, when the user inputs a process termination command. At the end of process (Yes in S50), the controller 4 transmits, to the server 150, information such as the 3D map 51 thus constructed.

3-2. Feature point matching

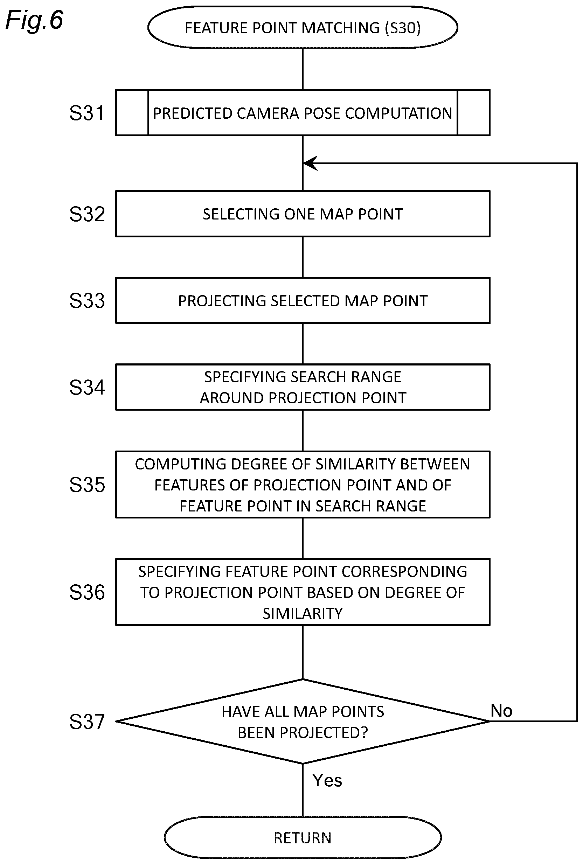

A description will be given below of details of the feature point matching step S30 shown in FIG. 3. FIG. 6 is a flowchart showing a detailed flow of the feature point matching step S30. First, the controller 4 computes a predicted camera pose at time t (S31).

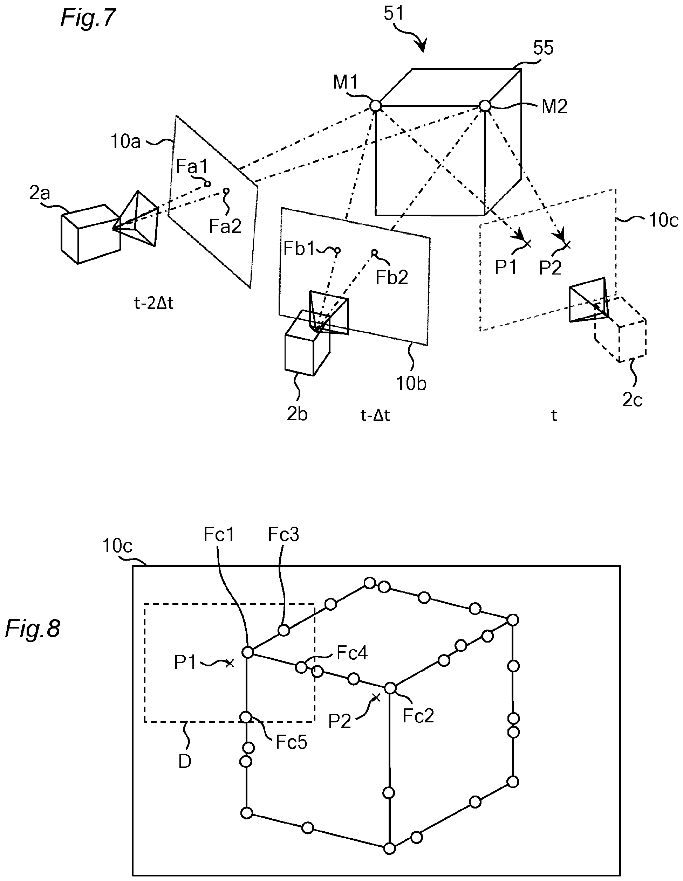

FIG. 7 is a diagram for describing the feature point matching process. FIG. 7 shows a camera 2a having a camera pose at time t - $2\Delta t$ computed in step S40 and a camera 2b having a camera pose at time t - $\Delta t$ computed in step S40. In step S31 according to the present embodiment, a camera pose of a camera 2c at time t is predicted based on the past camera poses of the cameras 2a, 2b and results of measurement made so far by the IMU 3. The cameras 2a, 2b, 2c are the same as the camera 2, but are on different time axes, so that the cameras 2a, 2b, 2c are denoted by different reference numerals to be distinguished from each other.

In FIG. 7, the cameras 2a, 2b, 2c capture an image of an object 55 having a cube shape. The object 55 is an example of a structure in the surroundings of the moving body 1 (see FIG. 5).

A captured image 10a is an image captured by the camera 2a at time t - $2\Delta t$. The captured image 10a contains feature points Fa1 and Fa2 (see step S20 shown in FIG. 3). A captured image 10b is an image captured by the camera 2b at time t - $\Delta t$. The captured image 10b contains feature points Fb1 and Fb2. In order to prevent the drawing from being complicated, images that should be shown in the captured images 10a, 10b have been eliminated from FIG. 7.

In FIG. 7, map points M1, M2 are set to the 3D map 51. The map point M1 is set, before time t - $\Delta t$, to the 3D map 51 based on the feature point Fa1 or Fb1. The map point M2 is set, before time t - $\Delta t$, to the 3D map 51 based on the feature point Fa2 or Fb2.

Returning to FIG. 6, the controller 4 selects, subsequent to step S31, one of the map points on the 3D map 51 (S32). Next, the controller 4 projects the map point thus selected onto the captured image on the assumption that the camera 2 has the predicted camera pose computed in step S31 (S33). Image coordinates of the projection point are computed through projective transformation of world coordinates of the map point on the 3D map 51. Specifically, the controller 4 projects the selected map point onto an image coordinate plane to obtain the image coordinates of the projection point.

A description will be given of step S32 and step S33 with reference to the example shown in FIG. 7. In step 32, for example, the controller 4 selects the map point M1 on the 3D map 51. Next, in step S33, the controller 4 projects the map point M1 onto the captured image 10c. In the example shown in FIG. 7, the projection point is denoted by P1. Further, as described later, the controller 4 repeats steps S31 to S36 until all the map points are projected (S37). For example, during the next loop after a determination results in No in step S37, when the map point M2 is selected in step S32, the controller 4 projects the map point M2 to a projection point P2 in step S33.

Returning to FIG. 6, the controller 4 specifies, subsequent to step S33, a search range D centered around the projection point P1 (S34). As illustrated in FIG. 8, the search range D may be a rectangle having a predetermined size centered around the projection point P1, but is not limited to such a rectangle. For example, the search range D may be a circle having a predetermined radius centered around the projection point.

Next, the controller 4 computes a degree of similarity between the feature of the projection point and the feature of the feature point in the search range D (S35). Step S35 will be described with reference to FIG. 8. The captured image 10c shown in FIG. 8 is a captured image captured by the camera 2c at time t and acquired by the controller 4 in step S10 shown in FIG. 3. In FIG. 8, the feature points extracted in step S20 shown in FIG. 3 are marked with circles. Further, in FIG. 8, the projection point P1 corresponding to the map point M1 projected in step 33 is marked with a cross.

In step S35, the controller 4 computes the degree of similarity between the feature of the projection point P1 and the feature of each of the feature points Fc1, Fc3, Fc4, Fc5 in the predetermined search range D centered around the projection point P1.

Examples of the feature of the feature point includes a SURF feature obtained based on Speeded-Up Robust Features (SURF), a SIFT feature obtained based on Scale-Invariant Feature Transform (SIFT), and an ORB feature obtained based on Oriented FAST and Rotated BRIEF (ORB).

The feature of the feature point is represented by, for example, a vector with one or more dimensions. For example, the SURF feature is represented by a 64-dimensional vector, and the SIFT feature is represented by a 128-dimensional vector.

The feature of the projection point is acquired when the feature point is extracted from the captured image captured before time t - $\Delta t$, and is stored in the storage 5 together with the feature point.

The degree of similarity computed in step S35 is computed as, for example, a distance such as the Euclidean distance between features.

The controller 4 specifies, subsequent to step S35, the feature point corresponding to the projection point based on the degree of similarity computed in step S35 (S36). In the example shown in FIG. 8, the controller 4 specifies the feature point Fc1 as a feature point similar in feature to the projection point P1. This causes the feature point Fc1 at time t to match with the feature point Fb1 at time t - Δt based on the projection point P1 and the map point M1 (see FIG. 7).

In step S36, when the degree of similarity between the projection point and the feature point is less than a predetermined threshold, the controller 4 does not specify the feature point as the feature point corresponding to the projection point. When there is no feature point having the degree of similarity with the projection point equal to or more than the threshold in the search range D, there is no feature point specified as the feature point corresponding to the projection point. In other words, feature point matching fails.

In step S36, when there are a plurality of feature points having the degree of similarity with the projection point equal to or more than the threshold in the search range D, the controller 4 specifies a feature point having the highest degree of similarity as the feature point corresponding to the projection point.

The controller 4 determines, subsequent to step S36, whether all the map points in the 3D map 51 have been projected onto the captured image 10c (S37). When all the map points have not been projected (No in S37), the controller 4 returns to step S32, selects one map point that has yet to be projected, and executes steps S33 to S37. When all the map points have been projected (Yes in S37), the feature point matching S30 is brought to an end.

### 3-3. Predicted camera pose computation

A description will be given below in details of a step S31 of computing the predicted camera pose at time t.

When the camera pose changes at a steady pace over time, in other words, when the moving body 1 moves to cause the camera pose to change at a steady pace over time, computation of the camera pose of the camera 2c at time t based on a difference between the camera pose of the camera 2a at time t - 2Δt and the camera pose of the camera 2b at time t - Δt (see FIG. 7) computed in step S40 (see FIG. 3) allows the projection point P1 and the feature point Fc1 (see FIG. 8) corresponding to the projection point P1 to match with each other with high accuracy.

In reality, when the camera pose shakes or the moving body 1 accelerates or rotates, the camera pose may not change at a steady pace over time. In such a case, as shown in FIG. 8, the position of the projection point P1 and the position of the feature point Fc1 that should correspond to the projection point P1 on the captured image 10c are separate from each other. Even with such a separation, the existence of the feature point Fc1 in the search range D enables the feature point matching.

However, when the moving body 1 significantly accelerates or rotates between time t - Δt and time t, the projection point P1 is projected to a place far away from the feature point Fc1, causing the feature point Fc1 to be located outside the search range D. This prevents the feature point Fc1 that should correspond to the projection point P1 from corresponding to the projection point P1, and the feature point matching fails accordingly.

Therefore, according to the present embodiment, the acceleration and/or angular velocity measured by the IMU 3 shown in FIG. 2 is used for predicting the camera pose. This allows the controller 4 to efficiently perform the feature point matching even when the moving body 1 accelerates or rotates.

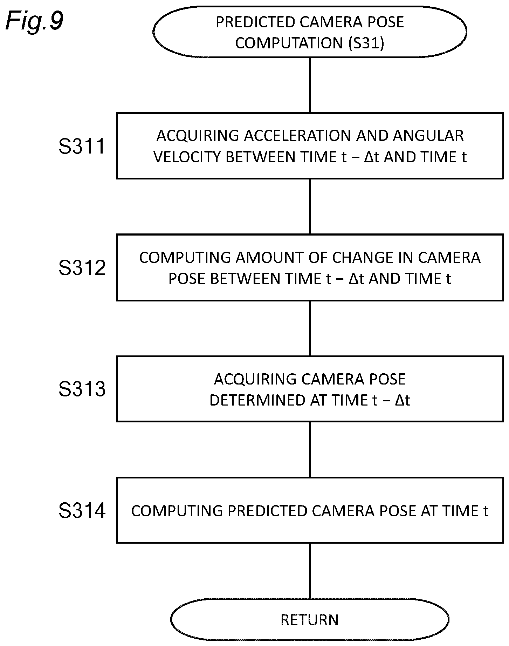

FIG. 9 is a flowchart showing a detailed flow of step S31 of computing the predicted camera pose at time t. Each process of the flowchart shown in FIG. 9 is executed by the controller 4 serving as a camera pose prediction unit 43 shown in FIG. 2.

First, the controller 4 acquires, from the IMU 3, the acceleration and angular velocity of the moving body 1 between time t - Δt and time t (S311) . Next, the controller 4 computes the amount of change in the camera pose between time t - Δt and time t by integrating both the acceleration and the angular velocity with respect to time (S312).

Next, the controller 4 acquires the camera pose computed at time t - Δt (S313). The camera pose acquired in step S313 is the same as the camera pose computed by the controller 4 in a step corresponding to step S40 (see FIG. 3) at time t - Δt. Note that step S313 may be executed before step S312 or before step S311.

Next, the controller 4 computes the predicted camera pose at time t based on the camera pose at time t - Δt acquired in step S313 and the amount of change in the camera pose between time t - Δt and time t computed in step S312 (S314).

According to the present embodiment, the acceleration and/or angular velocity measured by the IMU 3 is reflected in the prediction of the camera pose to allow the feature point matching to be efficiently performed even when the moving body 1 accelerates or rotates.

### 4. Summary

As described above, the positioning device 100 according to the present embodiment determines the position of the moving body 1. The positioning device 100 includes the camera 2 that is mounted on the moving body 1 and captures an image of surroundings of the moving body 1 to acquire the captured image, the IMU 3 that detects motion information such as acceleration and angular velocity indicating motion of the moving body 1, the controller 4 that extracts feature points from the captured images 10a, 10b, and the storage 5 that stores the map points M1, M2 each indicating a spatial position of a corresponding feature point in the surroundings. The controller 4 searches the captured image 10c for an on-image position corresponding to the spatial position indicated by each of the map points M1, M2 (S30) and computes a positional relationship between the spatial position indicated by each of the map points M1, M2 and the camera 2 to obtain the position of the moving body 1 in the surroundings (S40). The controller 4 sets, based on the motion information detected by the IMU 3, a reference point P1 for use in searching the captured image 10c for the spatial position.

The positioning device 100 according to the present embodiment can efficiently perform, even when the moving body 1 accelerates or rotates, the feature point matching by searching the captured image 10c for the spatial position based on the motion information detected by the IMU 3.

According to the present embodiment, the IMU 3 may detect motion information between the first time t - Δt and the second time t lining up in time which the camera 2 moves. The controller 4 can predict the camera pose at the second time t from the camera pose at the first time t - Δt based on the motion information (S31).

According to the present embodiment, the IMU 3 includes at least one of an inertial measurement unit, an accelerometer, or a gyroscope.

According to the present embodiment, the captured image includes a distance image and a color image.

(Second embodiment)

A description will be given, according to the second embodiment, of an example where the search range D is changed in size based on the result of measurement made by the IMU 3.

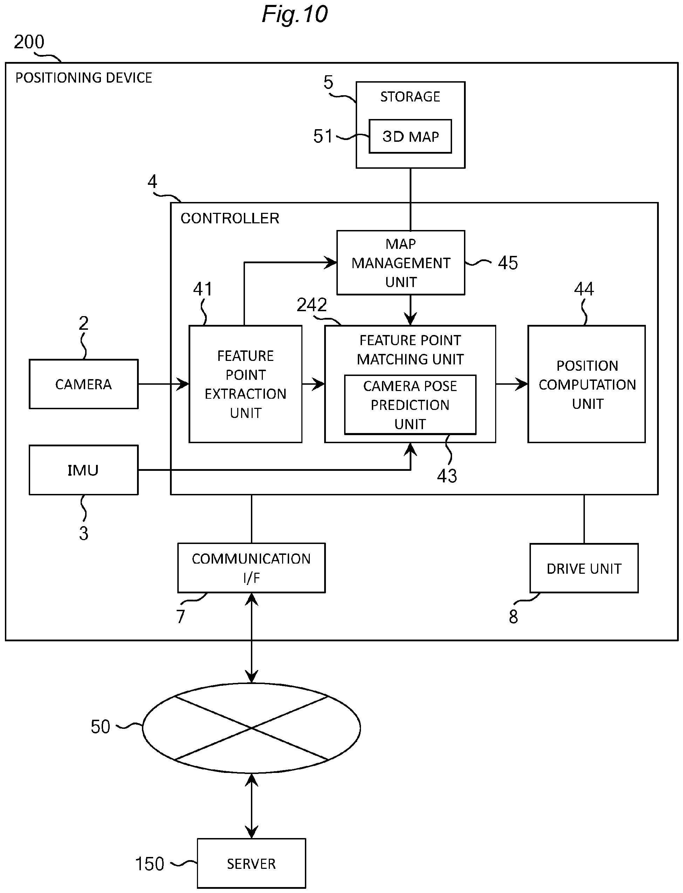

FIG. 10 is a block diagram showing a structure of a positioning device 200 according to the second embodiment of the present disclosure. The positioning device 200 is the same in structure as the positioning device 100 according to the first embodiment, except that the process performed by the controller 4 is different from the process according to the first embodiment.

The controller 4 of the positioning device 200 computes the position of the moving body 1 by executing steps S10 to S60 as shown in FIG. 3. However, the second embodiment is different in details of the feature point matching step S30 from the first embodiment.

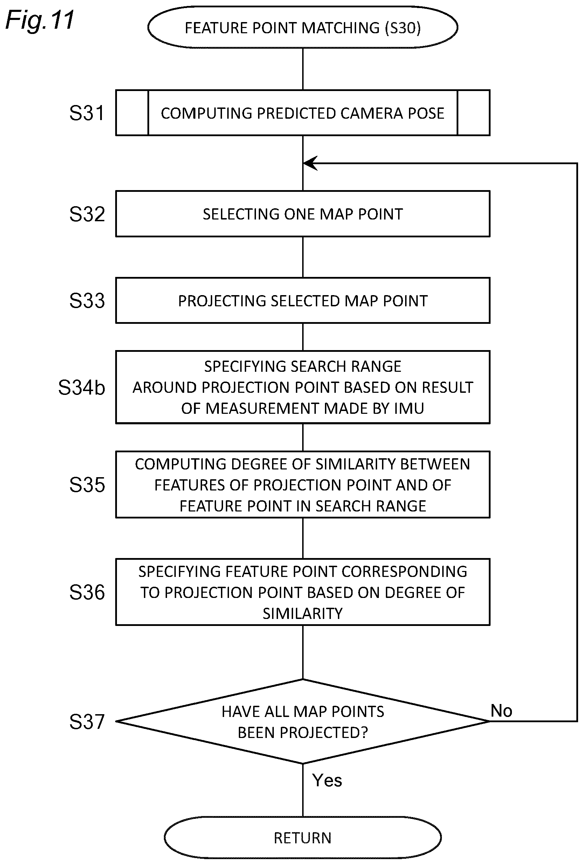

FIG. 11 is a flowchart showing a detailed flow of the feature point matching step according to the second embodiment. A comparison with FIG. 6 according to the first embodiment shows that step S34b according to the second embodiment is different from the search range specifying step S34 according to the first embodiment.

In step S34b, the controller 4 serving as a feature point matching unit 242 specifies the search range D based on the acquired result of measurement made by the IMU 3 such as the angular velocity. In other words, the controller 4 changes the size of the search range D based on the result of measurement made by the IMU 3 such as the value of the angular velocity.

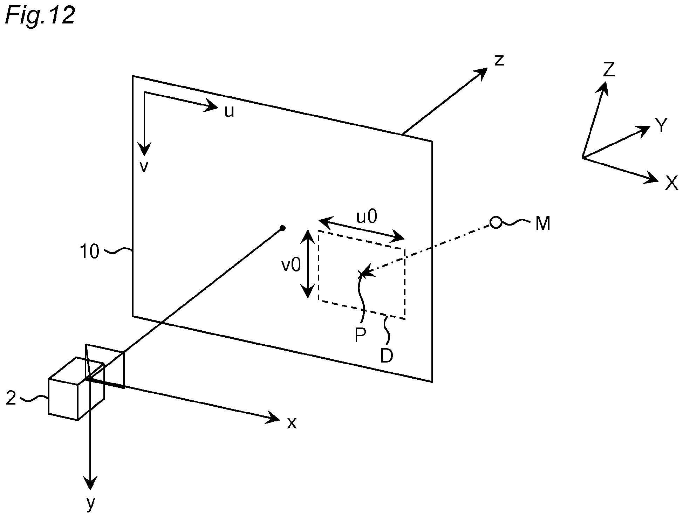

FIG. 12 is a diagram for describing the step S34b of specifying the search range D. FIG. 12 shows the camera 2 and the captured image 10 captured by the camera 2. The x-axis, y-axis, and z-axis that are orthogonal to each other are coordinate axes in a camera coordinate system whose origin coincides with an optical center of the camera 2. The optical center of the camera 2 is, for example, a center of a lens of the camera 2. The z-axis coincides with the optical axis of the camera 2.

The captured image 10 captured by the camera 2 is in an image plane. Each point in the captured image 10 is represented by u and v coordinates, orthogonal to each other, in an image coordinate system.

The position of the map point M in the 3D map 51 may be represented by the camera coordinate system or by the world coordinates X, Y and Z. The map point M is projected onto the captured image 10 in step S33 shown in FIG. 11. In FIG. 12, the projection point is denoted by P.

For example, when both the acceleration and angular velocity detected by the IMU 3 are zero, the controller 4 sets a rectangle having a length u0 in the u direction and a length v0 in the v direction centered around the projection point P as the search range D in the acquisition step S34b. u0 and v0 denotes initial values of the lengths of the predetermined search range D in the u and v directions. The lengths in the u and v directions are represented by, for example, the number of pixels.

Further, for example, when a determination is made based on the angular velocity detected by the IMU 3 that the camera 2 has rotated (yawed) about the y-axis, the controller 4 sets the length of the search range D in the u direction to u1 that is greater than u0. For example, the larger the angular velocity about the y-axis, the larger the difference between u1 and u0.

Likewise, for example, when a determination is made based on the angular velocity detected by the IMU 3 that the camera 2 has rotated (pitched) about the x-axis, the controller 4 sets the length of the search range D in the v direction to v1 that is greater than v0. For example, the larger the angular velocity about the x-axis, the larger the difference between v1 and v0.

Likewise, for example, when a determination is made based on the angular velocity detected by the IMU 3 that the camera 2 has rotated (rolled) about the z-axis, the controller 4 rotates the search range D in the rolling direction. For example, the larger the angular velocity about the z-axis, the larger the rotation angle.

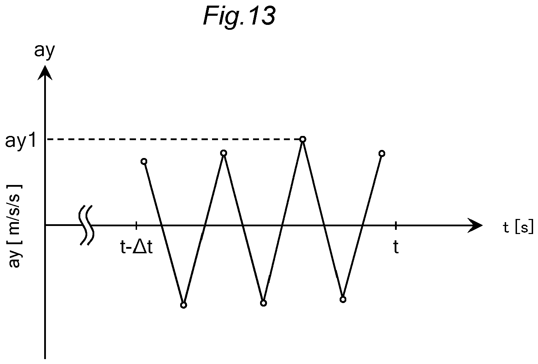

When the controller 4 detects vibrations based on the acceleration and/or angular velocity detected by the IMU 3, the search range D may be made larger than the initial value (u0 * v0). For example, the controller 4 determines that, when acceleration ay in the y-axis direction has fluctuated between positive and negative a predetermined threshold number of times or more between time t - Δt and t as shown in FIG. 13, the IMU 3 and in turn the moving body 1 has vibrated in the y-axis direction. When a determination is made that the moving body 1 has vibrated in the y-axis direction, the controller 4 sets, for example, the length of the search range D in the v direction to v1 that is greater than the initial value v0 (see FIG. 12).

The size of the search range D is determined based on, for example, how large the absolute value of the acceleration ay between time t - Δt and t is. In the example shown in FIG. 13, the controller 4 determines an enlargement ratio v1/v0 in the v direction applied to the search range D based on the largest absolute value ay1 of the acceleration between time t - Δt and time t. For example, the controller 4 increases v1/v0 as ay1 increases.

Likewise, for example, the controller 4 determines that, when acceleration ax in the x-axis direction has fluctuated between positive and negative the predetermined threshold number of times or more between time t - Δt and t, the IMU 3 and in turn the moving body 1 has vibrated in the x-axis direction. When a determination is made that the moving body 1 has vibrated in the x-axis direction, the controller 4 sets, for example, the length of the search range D in the u direction to u1 that is greater than the initial value u0.

As described above, according to the present embodiment, the controller 4 changes the search range D for use in searching the captured image 10c for the spatial position based on the motion information detected by the IMU 3 (S34b). This can prevent a situation where feature points in the current frame (captured image at time t) to be associated with feature points in the previous frame (captured image at time t - Δt) fall outside the search range D due to a change in the camera pose caused by the rotation or acceleration of the moving body 1. This in turn increases the efficiency of the feature point matching and the accuracy of computation of the position of the moving body 1.

(Third embodiment)

A description will be given, according to the third embodiment of the present disclosure, of an example of determining a region where no feature point search is made based on the result of measurement made by the IMU 3.

According to the third embodiment, the controller 4 computes the position of the moving body 1 by executing steps S10 to S60 as shown in FIG. 3. However, the third embodiment is different in details of the feature point matching step S30 from the first embodiment.

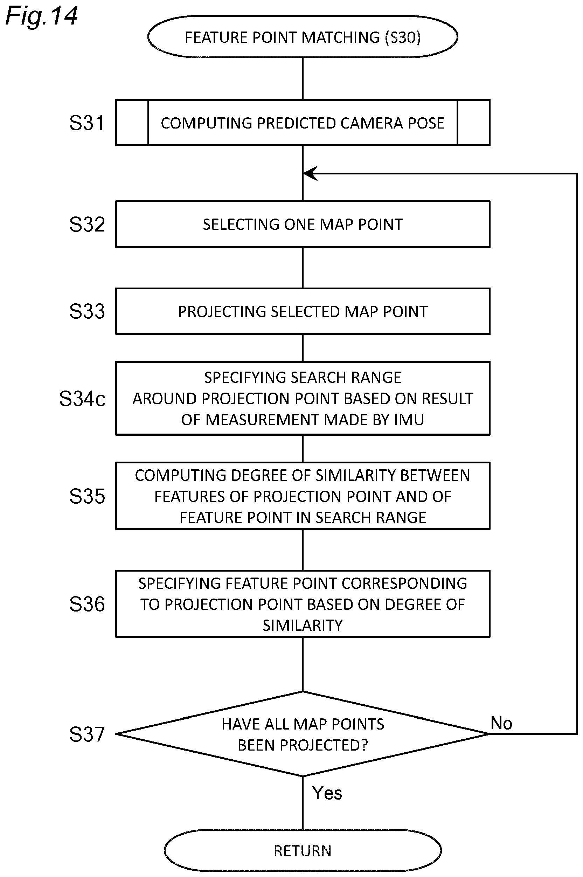

FIG. 14 is a flowchart showing a detailed flow of the feature point matching step according to the third embodiment. A comparison with FIG. 6 according to the first embodiment shows that step S34c according to the third embodiment is different from the search range specifying step S34 according to the first embodiment.

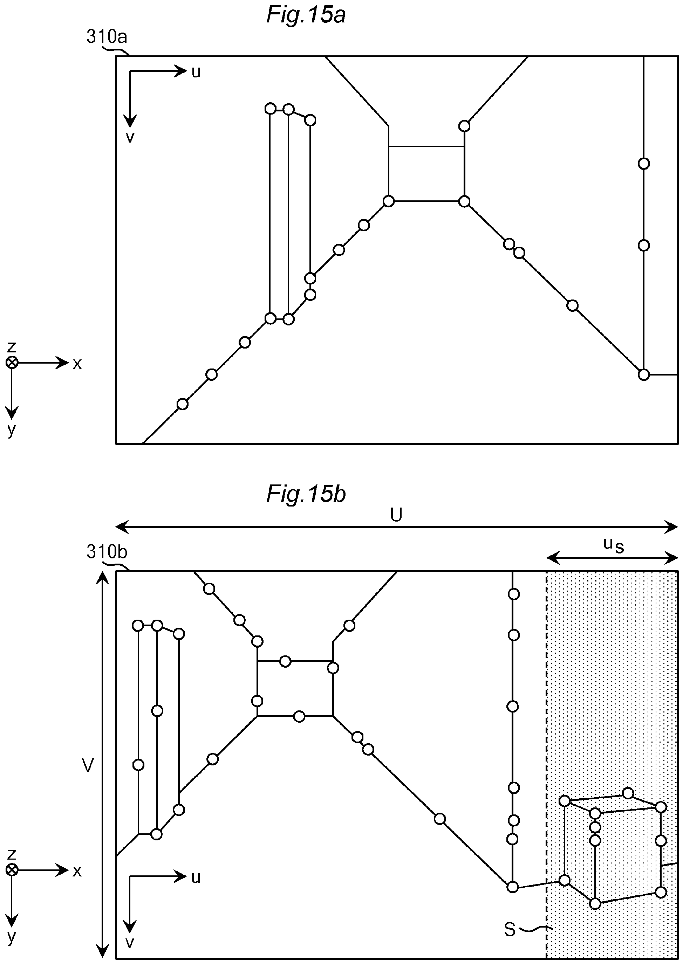

In step S34c, the controller 4 specifies the search range D based on the acquired result of measurement made by the IMU 3 such as the angular velocity. FIGS. 15a and 15b are diagrams for describing the step S34c of specifying the search range D. As shown in steps S10 and S60 shown in FIG. 3, the controller 4 acquires the captured image at regular time intervals Δt.

FIG. 15a is a diagram illustrating a captured image 310a captured at time t - Δt. FIG. 15b is a diagram illustrating a captured image 310b captured at time t. FIGS. 15a and 15b show camera coordinates x, y, and z and image coordinates u and v. In FIGS. 15a and 15b, points marked with circles indicate feature points extracted from the captured images 310a, 310b.

A region S in the captured image 310b at time t shown in FIG. 15b is a new region not shown in the captured image 310a at time t-Δt shown in FIG. 15a. Therefore, the feature points in the new region S shown in FIG. 15b are associated with none of the feature points in the captured image 310a shown in FIG. 15a. This causes, according to the third embodiment, the controller 4 to restrict the search range D based on the acquired result of measurement made by the IMU 3. Specifically, the controller 4 excludes the new region S from the search range D and excludes the feature points in the new region S from the feature point matching target.

The controller 4 determines the position and size of the new region S in the captured image based on the acquired result of measurement made by the IMU 3. For example, the controller 4 acquires the angular velocity detected by the IMU 3 between time t - Δt and time t and integrates the angular velocity thus acquired to compute a rotation angle φ of the camera 2 between time t - Δt and time t. The controller 4 computes the position and size of the new region S based on the rotation angle φ thus computed, the rotation direction, and an internal parameter of the camera 2.

For example, assuming that the camera 2 rotates about the y-axis by a rotation angle $\varphi_u$ between time t - Δt and time t, a length $u_s$ [pixel] of the new region S in the u direction shown in FIG. 15b can be computed by the following equation (1):

$$u_S = U * \varphi_u/\theta_u \quad (1)$$

where U [pixel] represents the total length of the captured image 310b in the u direction, and $\theta_u$ represents the angle of view of the camera 2 in the u direction.

Likewise, assuming that the camera 2 rotates about the x-axis by a rotation angle $\varphi_v$ between time t - Δt and time t, a length $v_s$ [pixel] of the new region S in the v direction can be computed by the following equation (2):

$$v_S = V * \varphi_v/\theta_v \quad (2)$$

where V [pixel] represents the total length of the captured image 310b in the v direction, and $\theta_v$ represents the angle of view of the camera 2 in the v direction.

As described above, according to the present embodiment, the controller 4 restricts the search range D based on the angle of view of the captured image 10 captured by the camera 2.

That is, the controller 4 computes the position and size of the new region S in the captured image based on the acquired result of measurement made by the IMU 3 and excludes the feature points in the new region S from the feature point matching target. This eliminates the need for associating the feature points in the new region S in the current frame (captured image at time t) 310b with the feature points in the previous frame (captured image at time t - Δt) 310a, which increases the efficiency of the feature point matching and in turn the accuracy of computation of the position of the moving body 1. Further, this makes the number of feature points, i.e. the feature point matching target, smaller in the current frame (captured image at time t) 310b, allowing a reduction in computational load on the controller 4.

As described above, the first to third embodiments have been described as examples of the technique disclosed in the present application. However, the technique according to the present disclosure is not limited to the embodiments and is applicable to embodiments in which changes, replacements, additions, omissions, or the like are made as appropriate. Further, it is also possible to combine the respective components described in the first to third embodiments to form a new embodiment.

INDUSTRIAL APPLICABILITY

The present disclosure is applicable to a positioning device that determines a position of a moving body.

REFERENCE SIGNS LIST

| 1 | moving body |
| 2 | camera |
| 3 | IMU |
| 4 | controller |
| 5 | storage |
| 7 | communication I/F |
| 8 | drive unit |
| 10 | captured image |
| 51 | 3D map |
| 100 | positioning device |

**Claims**

1. A positioning device that determines a position of a moving body, the positioning device comprising:

   an imaging unit that is mounted on the moving body and captures an image of surroundings of the moving body to acquire the captured image;

   a detector that detects motion information indicating motion of the moving body;
   a controller that extracts a feature point from the captured image; and
   a storage that stores position information indicating a spatial position of the feature point in the surroundings, wherein
   the controller searches the captured image for an on-image position corresponding to the spatial position indicated by the position information and computes a positional relationship between the spatial position indicated by the position information and the imaging unit to obtain the position of the moving body in the surroundings, and
   the controller sets, based on the motion information detected by the detector, a reference point for use in searching the captured image for the spatial position.

2. The positioning device according to claim 1, wherein

   the detector detects the motion information between a first time and a second time lining up in time which the imaging unit moves, and
   the controller predicts, based on the motion information, a position and orientation of the imaging unit at the second time from a position and orientation of the imaging unit at the first time.

3. The positioning device according to claim 1 or 2, wherein the controller changes, based on the motion information detected by the detector, a search range for use in searching the captured image for the spatial position.

4. The positioning device according to claim 3, wherein

   the detector detects an angular velocity of the moving body as the motion information, and
   the controller increases the search range as the angular velocity detected increases.

5. The positioning device according to claim 3 or 4, wherein the controller restricts the search range based on an angle of view of the captured image captured by the imaging unit.

6. The positioning device according to any one of claims 3 to 5, wherein

   the detector detects vibrations of the moving body as the motion information, and
   the controller increases the search range as the vibrations detected increase.

7. The positioning device according to any one of claims 1 to 6, wherein the detector includes at least one of an inertial measurement unit, an accelerometer, or a gyroscope.

8. The positioning device according to any one of claims 1 to 7, wherein the captured image includes a distance image and a color image.

9. A positioning device that determines a position of a moving body, the positioning device comprising:

> an imaging unit that is mounted on the moving body and captures an image of surroundings of the moving body to acquire the captured image;
> a detector that detects motion information indicating motion of the moving body;
> a controller that extracts a feature point from the captured image; and
> a storage that stores position information indicating a spatial position of the feature point in the surroundings, wherein
> the controller searches the captured image for an on-image position corresponding to the spatial position indicated by the position information and computes a positional relationship between the spatial position indicated by the position information and the imaging unit to obtain the position of the moving body in the surroundings, and
> the controller changes, based on the motion information detected by the detector, a search range for use in searching the captured image for the spatial position.

1

*Fig.1*

*Fig.2*

100

POSITIONING DEVICE

5

STORAGE

51 — 3D MAP

4

CONTROLLER

MAP MANAGEMENT UNIT — 45

41

2

CAMERA

FEATURE POINT EXTRACTION UNIT

42

FEATURE POINT MATCHING UNIT

CAMERA POSE PREDICTION UNIT

43

44

POSITION COMPUTATION UNIT

IMU

3

COMMUNICATION I/F

7

DRIVE UNIT

8

50

150 — SERVER

Fig.3

START

S10  ACQUIRING
     CAPTURED IMAGE AT TIME t

S20  EXTRACTING FEATURE POINTS

S30  FEATURE POINT
     MATCHING

S40  COMPUTING SELF-POSITION

S50  TO END ?

S60  $t \leftarrow t + \Delta t$

No

Yes

END

*Fig.4*

*Fig.5*

*Fig.6*

$$\text{FEATURE POINT MATCHING (S30)}$$

S31 | PREDICTED CAMERA POSE COMPUTATION

S32 | SELECTING ONE MAP POINT

S33 | PROJECTING SELECTED MAP POINT

S34 | SPECIFYING SEARCH RANGE AROUND PROJECTION POINT

S35 | COMPUTING DEGREE OF SIMILARITY BETWEEN FEATURES OF PROJECTION POINT AND OF FEATURE POINT IN SEARCH RANGE

S36 | SPECIFYING FEATURE POINT CORRESPONDING TO PROJECTION POINT BASED ON DEGREE OF SIMILARITY

S37 | HAVE ALL MAP POINTS BEEN PROJECTED?    No

Yes

RETURN

Fig.7

Fig.8

*Fig.9*

```
                    ┌──────────────────────────────┐
                    │   PREDICTED CAMERA POSE       │
                    │   COMPUTATION (S31)           │
                    └──────────────────────────────┘
                                  │
          ┌──────────────────────────────────────────────┐
    S311  │ ACQUIRING ACCELERATION AND ANGULAR           │
          │ VELOCITY BETWEEN TIME t – Δt AND TIME t      │
          └──────────────────────────────────────────────┘
                                  │
          ┌──────────────────────────────────────────────┐
    S312  │ COMPUTING AMOUNT OF CHANGE IN CAMERA         │
          │ POSE BETWEEN TIME t – Δt AND TIME t          │
          └──────────────────────────────────────────────┘
                                  │
          ┌──────────────────────────────────────────────┐
    S313  │ ACQUIRING CAMERA POSE                         │
          │ DETERMINED AT TIME t – Δt                     │
          └──────────────────────────────────────────────┘
                                  │
          ┌──────────────────────────────────────────────┐
    S314  │ COMPUTING PREDICTED CAMERA POSE AT TIME t    │
          └──────────────────────────────────────────────┘
                                  │
                    ┌──────────────────────────────┐
                    │          RETURN               │
                    └──────────────────────────────┘
```

*Fig.10*

200

POSITIONING DEVICE

5 — STORAGE

51 — 3D MAP

4 — CONTROLLER

MAP MANAGEMENT UNIT — 45

41

242 — FEATURE POINT MATCHING UNIT

44

2 — CAMERA

FEATURE POINT EXTRACTION UNIT

CAMERA POSE PREDICTION UNIT

POSITION COMPUTATION UNIT

43

3 — IMU

COMMUNICATION I/F

7

DRIVE UNIT

8

50

150 — SERVER

*Fig.11*

$$\boxed{\text{FEATURE POINT MATCHING (S30)}}$$

S31 | COMPUTING PREDICTED CAMERA POSE

S32 | SELECTING ONE MAP POINT

S33 | PROJECTING SELECTED MAP POINT

S34b | SPECIFYING SEARCH RANGE
AROUND PROJECTION POINT BASED ON RESULT
OF MEASUREMENT MADE BY IMU

S35 | COMPUTING DEGREE OF SIMILARITY BETWEEN
FEATURES OF PROJECTION POINT AND OF
FEATURE POINT IN SEARCH RANGE

S36 | SPECIFYING FEATURE POINT CORRESPONDING
TO PROJECTION POINT BASED ON DEGREE OF
SIMILARITY

S37 | HAVE ALL MAP POINTS
BEEN PROJECTED?     No

Yes

$$\boxed{\text{RETURN}}$$

*Fig.12*

*Fig.13*

*Fig.14*

```
        ┌─────────────────────────────────┐
        │  FEATURE POINT MATCHING (S30)    │
        └─────────────────────────────────┘
                        │
     ┌───┬──────────────────────────────────┬───┐
S31  │   │  COMPUTING PREDICTED CAMERA POSE  │   │
     └───┴──────────────────────────────────┴───┘
                        │
                        ▼ ◄──────────────────────┐
     ┌──────────────────────────────────────┐    │
S32  │       SELECTING ONE MAP POINT         │    │
     └──────────────────────────────────────┘    │
                        │                         │
     ┌──────────────────────────────────────┐    │
S33  │     PROJECTING SELECTED MAP POINT      │    │
     └──────────────────────────────────────┘    │
                        │                         │
     ┌──────────────────────────────────────┐    │
     │        SPECIFYING SEARCH RANGE         │    │
S34c │ AROUND PROJECTION POINT BASED ON RESULT│    │
     │      OF MEASUREMENT MADE BY IMU        │    │
     └──────────────────────────────────────┘    │
                        │                         │
     ┌──────────────────────────────────────┐    │
     │ COMPUTING DEGREE OF SIMILARITY BETWEEN │    │
S35  │    FEATURES OF PROJECTION POINT AND OF │    │
     │      FEATURE POINT IN SEARCH RANGE     │    │
     └──────────────────────────────────────┘    │
                        │                         │
     ┌──────────────────────────────────────┐    │
     │ SPECIFYING FEATURE POINT CORRESPONDING │    │
S36  │  TO PROJECTION POINT BASED ON DEGREE OF│    │
     │             SIMILARITY                 │    │
     └──────────────────────────────────────┘    │
                        │                         │
                    ◇───────◇  No                 │
S37          HAVE ALL MAP POINTS ────────────────┘
             BEEN PROJECTED?
                    ◇───────◇
                        │ Yes
        ┌─────────────────────────────────┐
        │             RETURN               │
        └─────────────────────────────────┘
```

*Fig.15a*

*Fig.15b*

## INTERNATIONAL SEARCH REPORT

| International application No. |
|---|
| PCT/JP2019/046198 |

A. CLASSIFICATION OF SUBJECT MATTER
Int.Cl. G05D1/02(2020.01)i, G01B11/00(2006.01)i, G08G1/00(2006.01)i,
G01C21/12(2006.01)i, G01C21/30(2006.01)i, G06T7/00(2017.01)i
FI: G01C21/12, G01C21/30, G01B11/00H, G05D1/02K, G08G1/00X, G06T7/00300F,
G06T7/0650B
According to International Patent Classification (IPC) or to both national classification and IPC

B. FIELDS SEARCHED

Minimum documentation searched (classification system followed by classification symbols)
Int.Cl. G05D1/02, G01B11/00, G08G1/00, G01C21/12, G01C21/30, G06T7/00

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2009-156611 A (TOYOTA MOTOR CORPORATION) 16.07.2009 (2009-07-16), paragraphs [0003], [0004], [0015], [0017], [0021]-[0050], [0062] | 1-9 |
| Y | JP 2016-148956 A (DENSO IT LABORATORY INC.) 18.08.2016 (2016-08-18), paragraph [0054] | 1-9 |
| Y | JP 2007-303886 A (SONY CORPORATION) 22.11.2007 (2007-11-22), paragraphs [0026]-[0028] | 2, 7 |
| Y | WO 2018/212292 A1 (PIONEER CORPORATION) 22.11.2018 (2018-11-22), paragraph [0026] | 4, 6 |
| Y | WO 2009/150793 A1 (PANASONIC CORPORATION) 17.12.2009 (2009-12-17), paragraphs [0074], [0075] | 5 |
| Y | JP 2018-9833 A (SOKEN INC.) 18.01.2018 (2018-01-18), paragraph [0038] | 8 |

☐ Further documents are listed in the continuation of Box C.    ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 19.02.2020 | 03.03.2020 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

<table>
<tr><td colspan="2"><strong>INTERNATIONAL SEARCH REPORT</strong><br>Information on patent family members</td><td>International application No.<br><em>PCT/JP2019/046198</em></td></tr>
</table>

| | | |
|---|---|---|
| JP 2009-156611 A | 16.07.2009 | US 2010/0226544 A1<br>paragraphs [0003], [0004],<br>[0015], [0017],<br>[0047]-[0076], [0088]<br>WO 2009/081920 A1<br>CN 101910781 A |
| JP 2016-148956 A | 18.08.2016 | (Family: none) |
| JP 2007-303886 A | 22.11.2007 | US 2007/0265741 A1<br>paragraphs [0051]-[0053] |
| WO 2018/212292 A1 | 22.11.2018 | (Family: none) |
| WO 2009/150793 A1 | 17.12.2009 | US 2011/0157379 A1<br>paragraphs [0095], [0096] |
| JP 2018-9833 A | 18.01.2018 | (Family: none) |

Form PCT/ISA/210 (patent family annex) (January 2015)

**EP 3 904 995 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016031105 A